Europäisches Patentamt

European Patent Office

Office européen des brevets

(19)

(11) **EP 0 749 665 B1**

(12) **EUROPÄISCHE PATENTSCHRIFT**

(45) Veröffentlichungstag und Bekanntmachung des Hinweises auf die Patenterteilung:
**06.05.1999 Patentblatt 1999/18**

(21) Anmeldenummer: **95909698.3**

(22) Anmeldetag: **10.02.1995**

(51) Int Cl.$^6$: **H04Q 7/22**, H04L 12/56

(86) Internationale Anmeldenummer:
**PCT/EP95/00474**

(87) Internationale Veröffentlichungsnummer:
**WO 95/24806 (14.09.1995 Gazette 1995/39)**

(54) **VERFAHREN ZUM ÜBERTRAGEN VON DATENPAKETEN ÜBER FUNKKANÄLE UND ENDGERÄT DAFÜR**

PROCESS AND TERMINAL FOR TRANSMITTING DATA PACKETS THROUGH RADIO CHANNELS

PROCEDE ET TERMINAL DE TRANSMISSION DE PAQUETS DE DONNEES PAR L'INTERMEDIAIRE DE CANAUX RADIO

(84) Benannte Vertragsstaaten:
**AT BE CH DE ES FR GB IE IT LI LU NL**

(30) Priorität: **07.03.1994 DE 4407544**

(43) Veröffentlichungstag der Anmeldung:
**27.12.1996 Patentblatt 1996/52**

(73) Patentinhaber: **ALTVATER, Ulrich**
**D-74906 Bad Rappenau (DE)**

(72) Erfinder: **ALTVATER, Ulrich**
**D-74906 Bad Rappenau (DE)**

(74) Vertreter: **Dreiss, Fuhlendorf, Steimle & Becker,**
**Patentanwälte**
**Postfach 10 37 62**
**70032 Stuttgart (DE)**

(56) Entgegenhaltungen:
**EP-A- 0 571 104          CA-A- 2 063 901**

## Beschreibung

Die vorliegende Erfindung betrifft ein Verfahren zum Übertragen von Datenpaketsätzen sowie ein Endgerät für ein Zusatznetz mit mehreren Endgeräten zum Übertragen von Datenpaketsätzen.

Ein derartiges Verfahren sowie ein derartiges Gerät sind in den nicht vorveröffentlichten deutschen Patentanmeldungen P 43 04 906.0-53 sowie P 43 04 916.8-31 beschrieben, die im Namen des Anmelders der vorliegenden Anmeldung eingereicht wurden.

Des weiteren ist in der CA-A-2 063 901 und in der EP-A-0 571 104 jeweils ein Verfahren zum Übertragen von Datenpaketsätzen über mehrere Frequenzkanäle beschrieben, das zum Teil in einem bestehenden Basisnetz zur digitalen Daten- und/oder Sprachübertragung verwendet werden kann.

Das eingangs genannte Verfahren sowie das eingangs genannte Endgerät arbeiten mit einem festen Frequenzkanal, über den die Paketdatensätze zwischen Endstationen und Zwischenstationen einerseits sowie einer Zentralstation andererseits ausgetauscht werden.

Mit dem steigenden Aufkommen an zu übertragenden Informationen steigt auch der Bedarf, mehrere derartige Netze nachträglich in geographischen Gebieten in Betrieb zu nehmen, wo bereits andere Netze existieren. Aus physikalischen Gründen ist die Zahl der zur Verfügung stehenden terrestrischen Funkkanäle jedoch begrenzt, so daß zur Zeit sowohl auf nationaler als auch auf internationaler Ebene Anstrengungen unternommen werden, um weitere Frequenzkanäle zur Verfügung stellen zu können.

Ferner muß insbesondere bei den Netzen, die für Echtzeitübertragung ausgelegt sind, ein hoher Störabstand und eine gewisse Redundanz vorhanden sein, was zusätzlich Frequenzkanalkapazität abfordert. In digitalen Sprachnetzen, die im Zeitmultiplexverfahren (TDMA) arbeiten, ist dies besonders wichtig, denn wenn die einzelnen verschachtelten Datenpakete nicht mit der erforderlichen Geschwindigkeit übertragen werden können, führt dies bei der Sprache zu Echoeffekten oder zu starken Lauf zeitverzögerungen, was beides unerwünscht ist.

Um den Störabstand zu erhöhen, wird das zu bedienende Gebiet darüber hinaus oft in Teilgebiete unterteilt, in denen jeweils nur ein Teil der gesamt zur Verfügung stehenden Frequenzkanäle verwendet wird. So werden zum Beispiel in zwei unmittelbar aneinandergrenzenden Gebieten nicht dieselben Frequenzkanäle verwendet, was z. B. das Übersprechen reduziert. Dieses Verfahren wird mit "Mehrfachausnutzung der Frequenz" oder "Frequency reuse" bezeichnet. Auch dies führt dazu, daß zusätzliche Frequenzkanalkapazitäten bereitgestellt werden müssen, denn in einem gegebenen Teilgebiet können nicht alle Kanäle verwendet werden, die dem jeweiligen Netz zugeordnet sind.

Die maximale Kanalkapazität wird ferner durch das zeitlich sehr unterschiedliche Lastverhalten der Netze bestimmt, so sind digitale Telefonnetze z. B. zu verschiedenen Tageszeiten deutlich unterschiedlich ausgelastet. Um dem Anwender jedoch jederzeit einen Kanal zur Verfügung stellen zu können, muß der Netzbetreiber eine große Anzahl von redundanten Kanälen bereitstellen.

Beispiele für derartige Netze, wie sie zur Zeit entweder bereits aufgebaut wurden oder in der Erprobungsphase sind, sind zum Beispiel das Funknetz GSM (Groupe Special Mobile), ein in Deutschland DI- oder D2-Netz genanntes europäisches digitales Funknetz im 900 MHz-Bereich, oder das Funknetz PCN (Personal Communication Network), das im 1,7/1,8 GHz-Bereich arbeitet und in Deutschland E-plus genannt wird. Diese Netze decken einen großen Frequenzbereich für terrestrischen Funk ab, so daß es immer schwieriger wird, für zusätzliche Dienste Kanalkapazitäten bereitzustellen.

Hiervon ausgehend ist es Aufgabe der vorliegenden Erfindung, das eingangs genannte Verfahren sowie das eingangs genannte Endgerät dahingehend weiterzubilden, das im terrestrischen Frequenzspektrum zusätzliche Übertragungskapazitäten geschaffen werden. Dabei sollen bereits bestehende Dienste möglichst wenig gestört werden. Ferner soll der technische Aufwand sich in vertretbarem Rahmen halten.

Erfindungsgemäß wird diese Aufgabe durch ein Verfahren zum Übertragen von Datenpaketsätzen über mehrere Frequenzkanäle gelöst, die zumindest zum Teil bereits in einem bestehenden Basisnetz zur digitalen Daten- und/oder Sprachübertragung verwendet werden, wobei die Übertragung in einem Zusatznetz zwischen mehreren Endgeräten erfolgt, von denen jedes eine eigene Adresse aufweist, die anderen Endgeräten bekannt ist, und wobei das neue Verfahren die Schritte aufweist:

1) Ermitteln eines von dem Basisnetz gerade nicht belegten Frequenzkanales, aufgrund von von dem Basisnetz selbst ausgesendeten Infomationen oder Signalen, die von jedem Endgerät empfangen und entsprechend ausgewertet werden.

2) Übertragen eines Datenpaketsatzes über den ermittelten Frequenzkanal, und

3) zyklisches Wiederholen der Schritte 1) und 2) nach Art einer Frequenzsprungtechnik, bis alle Datenpaketsätze einer Sendung übertragen wurden.

Erfindungsgemäß wird diese Aufgabe ferner durch ein Endgerät für ein Zusatznetz mit mehreren Endgeräten zum Übertragen von Paketdatensätzen über mehrere Frequenzkanäle gelöst, die zumindest zum Teil bereits von einem bestehenden Basisnetz zur digitalen Daten- und/oder Sprachübertragung verwendet werden, wobei das Endgerät in der Art der Frequenzsprungtechnik die Datenpaketsätze zeitlich gestaffelt auf von dem Basisnetz jeweils nicht belegten Frequenzkanälen überträgt und eine Prüfschaltung aufweist, die aufgrund von von dem Basisgerät selbst ausgesendeten und von dem Endgerät empfangenen Informationen oder Signalen überprüft, ob der ausgewählte Frequenzkanal von dem Basisnetz belegt ist.

Die erfindungsgemäße Aufgabe wird auf diese Weise vollständig gelöst. Der Erfinder der vorliegenden Anmeldung hat nämlich erkannt, daß es durch die Verwendung der Frequenzsprungtechnik möglich ist, bestehende Kanäle besser auszunutzen, ohne daß das jeweilige Basisnetz gestört wird. Wie in der Frequenzsprungtechnik üblich, werden die einzelnen Paketdatensätze zeitlich gestaffelt über verschiedene Frequenzkanäle übertragen, wobei die Last auf die zur Verfügung stehenden Kanäle verteilt wird, die gerade von dem Basisnetz nicht belegt sind. Mit anderen Worten, ein erster Datenpaketsatz wird über einen ersten Frequenzkanal übertragen, der gerade von dem Basisnetz nicht belegt ist, dann wird ein zweiter Paketdatensatz über einen zweiten Frequenzkanal übertragen, der jetzt von dem Basisnetz gerade nicht belegt wird, und so weiter. Auf diese Weise wird ein gerade von dem Basisnetz nicht belegter Frequenzkanal nur kurzzeitig zur Übertragung eines Datenpaketsatzes verwendet, wobei durch das Frequenzsprungverfahren die Last auf alle Frequenzkanäle verteilt wird. Die kurze zusätzliche Nutzung eines jeweiligen Frequenzkanales zur Übertragung eines Datenpaketsatzes stellt insofern keine Beeinträchtigung des Basisnetzes dar, da dieser Frequenzkanal ja augenblicklich von dem Basisnetz nicht genutzt wird, sondern wegen der eingangs beschriebenen Vorkehrungen wegen des wechselnden Lastverhaltens, des erforderlichen Störabstandes etc. zu Redundanz zwecken vorgesehen ist und vielleicht erst in einigen Sekunden wieder benutzt wird. Auf diese Weise können über die bereits vorhandenen und anderweitig zugeordneten Frequenzkanäle weitere Daten übertragen werden.

Dabei ist es bevorzugt, wenn der Schritt 1) die Schritte umfaßt:

> 1.1) Auswählen eines der mehreren Frequenzkanäle,
> 1.2) Überprüfen, ob der ausgewählte Frequenzkanal von dem Basisnetz belegt wird, und
> 1.3) zyklisches Wiederholen der Schritte 1.1) und 1.2), bis ein gerade nicht belegter Frequenzkanal ermittelt wurde.

Zu diesem Zweck umfaßt das Endgerät vorteilhafterweise eine Auswahlschaltung zum Auswählen eines der mehreren Frequenzkanäle, eine Prüfschaltung zum Überprüfen, ob der ausgewählte Frequenzkanal von dem Basisnetz belegt wird, und eine Ablaufsteuerung, die die Auswahlschaltung und die Prüfschaltung zyklisch so lange ansteuert, bis ein gerade nicht belegter Frequenzkanal ermittelt wurde.

Hier ist von Vorteil, daß sich das neue Verfahren und das neue Endgerät adaptiv an das Basisnetz anpassen. Die "Löcher", die sich durch die aktuell nicht belegten Frequenzkanäle des Basisnetzes ergeben, werden "gestopft", indem zunächst in den ausgewählten Frequenzkanal "hineingehorcht" wird, bevor ein Datenpaketsatz auf diesem Frequenzkanal gesendet wird.

Dabei ist es dann besonders bevorzugt, wenn im Schritt 1.1) im zeitlichen Mittel alle der mehreren Frequenzkanäle gleich häufig ausgewählt werden.

Hier ist von Vorteil, daß die Last auf alle Frequenzkanäle gleich verteilt wird, was im zeitlichen Mittel eine noch höhere Auslastung der bestehenden Frequenzkanäle sicherstellt. Insbesondere dann, wenn die Auswahl statistisch oder pseudo-statistisch vorgenommen wird, ist auch die Wahrscheinlichkeit größer, auf einen "freien" Kanal zu stoßen.

Ferner ist es bevorzugt, wenn im Schritt 1.2) der ausgewählte Frequenzkanal abgehört wird, um zu überprüfen, ob das Basisnetz gerade auf diesem Frequenzkanal sendet.

Hier ist von Vorteil, daß eine Störung des Basisnetzes auf einfache Weise verhindert wird, es muß lediglich in den ausgewählten Frequenzkanal hineingehört werden, um seine Belegung zu testen.

Alternativ ist es ebenfalls von Vorteil, wenn im Schritt 1.2) ein Organisationskanal des Basisnetzes abgehört wird, der alle gerade belegten und/oder alle gerade freien Frequenzkanäle meldet.

Hier ist weiter von Vorteil, daß eine Störung des Basisnetzes noch weiter ausgeschlossen wird. Beim Abhören des ausgewählten Frequenzkanales kann es nämlich möglich sein, daß ein schwacher Sender überhört wird, was bei dem Organisationskanal nicht möglich ist, denn dieser wird von der sendestarken Basisstation des Basisnetzes ausgesandt und weist eine entsprechende Sendestärke, da er ja im gesamten Bereich von den Teilnehmern des Basisnetzes empfangen werden muß.

In diesem Zusammenhang ist es bei dem neuen Endgerät bevorzugt, wenn die Prüfschaltung einen Empfänger umfaßt, der auf dem ausgewählten Frequenzkanal oder auf dem Organisationkanal empfängt.

Diese Maßnahme ist insbesondere schaltungstechnisch von Vorteil, denn der sowieso in dem Endgerät vorhandene Empfänger kann zusätzlich dazu verwendet werden, die Belegung des ausgewählten Frequenzkanales abzufragen.

Weiter ist es bevorzugt, wenn im Schritt 1.1) der eine Frequenzkanal in Abhängigkeit von einer allen Endgeräten gemeinsamen Systemzeit und von der Adresse des Endgerätes ausgewählt wird, für das die Sendung bestimmt ist, so daß an jedem Endgerät bekannt ist, über welchen Frequenzkanal bei gegebener Systemzeit für dieses Endgerät bestimmte Datenpaketsätze übertragen werden.

In diesem Zusammenhang ist es für ein Endgerät bevorzugt, wenn es eine eigene Adresse in dem Zusatznetz aufweist und eine Systemzeituhr umfaßt, wobei die Auswahlschaltung aus der aktuellen, allen Endgeräten gemeinsamen Systemzeit und der Adresse des Endgerätes, für das die Sendung bestimmt ist, den ausgewählten Frequenzkanal berechnet.

Hier ist von Vorteil, daß über die mehreren Frequenzkanäle mehrere Sendungen gleichzeitig abgewickelt werden können, wobei die Synchronisation zwischen den verschiedenen Sendern und Empfängern im Zusatznetz über die Adressen der Empfänger und die allen bekannte Systemzeit erfolgt. Hierdurch ist eine noch größere Ausnutzung der bestehenden Frequenzkanäle möglich. Der Erfinder hat nämlich erkannt, daß bestehende Basisnetze, wie z.B. die eingangs erwähnten GSM- oder PCN-Netze, ihre Frequenzkanäle nur zu 50 - 60 % ausnutzen, so daß mittels des neuen Verfahrens und der neuen Endgeräte 50 oder mehr zusätzliche Verbindungen zwischen Endgeräten in einem Zusatznetz über die dem Basisnetz zugeordneten Frequenzkanäle möglich sind, ohne daß das Basisnetz dies auch nur bemerkt.

Weiter ist es bevorzugt, wenn mit Hilfe eines Pseudo-Zufallszahlengenerators aus der Adresse des Endgerätes und der Systemzeit der ausgewählte Frequenzkanal berechnet wird.

Dies hat den Vorteil, daß nicht nur eine Gleichverteilung der Last auf alle Frequenzkanäle erreicht wird, die einzelnen Frequenzkanäle werden auch quasi-zufällig daraufhin abgefragt, ob sie gerade durch das Basisnetz belegt sind, was insgesamt dazu führt, daß schneller ein gerade freier Frequenzkanal gefunden wird, als wenn dies stochastisch iterativ durchgeführt würde.

Dabei ist es weiter von Vorteil, wenn die Systemzeit über eine Zentralstation des Zusatznetzes synchronisiert wird.

Zwar wäre es möglich, statt einer eigenen Systemzeit das z.B. von der Physikalisch-Technischen Bundesanstalt ausgesandte Zeitsignal zu verwenden, dies würde jedoch einen höheren technischen Aufwand bedeuten. Jedes Endgerät könnte auch mit einer eigenen unabhängigen Uhr versehen sein, dies hätte jedoch den Nachteil, daß Laufzeitunterschiede bei den Uhren dazu führen würden, daß Datenpaketsätze in dem Zusatznetz "verloren" gingen, weil Sender und Empfänger wegen des Zeitversatzes auf unterschiedlichen Frequenzkanälen senden bzw. empfangen. Diesen Laufzeitunterschieden könnte zum Teil dadurch Rechnung getragen werden, daß zwischen der Aussendung einzelner Datenpaketsätze ein genügender Zeitabstand gelassen würde, so daß alle Endgeräte auf ihren jeweils neuen Empfangskanal umgeschaltet haben. Dies würde aber andererseits dazu führen, daß die Verkehrsdichte in dem Zusatznetz nicht besonders groß sein kann. Durch die Synchronisation über die Zentralstation ist jetzt ein sehr viel dichterer Abstand der Datenpaketsätze möglich, was die Auslastung der Frequenzkanäle weiter erhöht.

In diesem Zusammenhang sei noch darauf hingewiesen, daß jedes Endgerät aus seiner eigenen Adresse und der aktuellen Systemzeit jeweils berechnet, über welchen Frequenzkanal Sendungen zu erwarten sind. Im Takt der Systemzeit schaltet jedes Endgerät auf einen neuen Frequenzkanal um und wartet auf eingehende Sendungen. Sollte dieser Frequenzkanal gerade von dem Basisnetz verwendet werden, so erkennt das empfangende Endgerät dies an den unterschiedlichen Strukturen der ankommenden Datenpaketsätze und ignoriert diese bis zum Umschalten auf einen neuen Frequenzkanal.

Dabei ist es von Vorteil, wenn sich die Systemzeit in einem zeitlichen Abstand wiederholt, der in feste Zeitschlitze eingeteilt ist, und wenn die Schritte 1) und 2) synchron mit den Zeitschlitzen durchgeführt werden, wobei der Schritt 2) in der Regel weniger als einen Zeitschlitz erfordert.

Die Systemzeit kann zum Beispiel in zeitlichen Abständen von 10 Sekunden wiederholt werden, wobei die Zeitschlitze jeweils 10 ms betragen. Die zyklische Wiederholung der Systemzeit vereinfacht insbesondere das oben ausführlich diskutierte Berechnen des nächsten, auszuwählenden Frequenzkanales aus der jeweiligen Adresse des Endgerätes und der aktuellen Systemzeit. Die Kürze der Zeitschlitze hat den Vorteil, daß das Basisnetz selbst dann nur geringfügig beeinträchtigt wird, wenn z.B. aus Versehen doch über einen Frequenzkanal ein Datenpaketsatz ausgeschickt wurde, der gerade von dem Basisnetz belegt ist. Ein Datenpaketsatz, der eine Länge von 10 ms aufweist, ist z.B. in einem Sprachkanal nur als kurzes "Piepen" zu hören, das in dem üblicherweise vorhandenen Rauschen untergeht. Wegen des gewählten Verfahrens zur Auswahl des Frequenzkanales ist es erforderlich, daß die Zahl der Zeitschlitze, in die der Systemzeitabstand aufgeteilt wird, gleich oder größer als die Zahl der Endgeräte in dem Zusatznetz ist.

Hier ist es bevorzugt, wenn die Zahl der Zeitschlitze in dem zeitlichen Abstand größer ist als die Zahl der mehreren Frequenzkanäle, vorzugsweise ein ganzzeiliges Vielfaches davon beträgt.

Hier ist von Vorteil, daß auf diese einfache Weise die Gleichverteilung der Last auf die Frequenzkanäle sichergestellt wird. Während eines Durchlaufes der Systemzeit wird so für jedes Endgerät zumindest einmal jeder verfügbare Frequenzkanal zum Senden und/oder Empfangen ausgewählt.

Insgesamt ist es bevorzugt, wenn die mehreren Frequenzkanäle zu Sendekanälen einer Basisstation des Basisnetzes zählen.

Dies hat den gleichen Vorteil, wie das Abhören des oben bereits erwähnten Organisationskanales, die Sendekanäle der Basisstation sind nämlich stärker als die Sendekanäle der einzelnen Teilnehmer, die leichter "überhört" werden können als die Basisstation. Durch diese Maßnahme wird also sichergestellt, daß nur auf zur Zeit nicht belegten Frequenzkanälen Datenpaketsätze übertragen werden.

Ferner ist es bevorzugt, wenn ein Sendekanal und ein bei einer Zweiwegverbindung zugehöriger Empfangskanal einer Basisstation des Basisnetzes einen festen Frequenzabstand aufweisen, wenn im Schritt 1) ein von dem Basisnetz gerade nicht belegter Sendekanal der Basisstation ermittelt wird, und wenn im Schritt 2) nach dem Übertragen eines Datenpaketes über den ermittelten Sendekanal ein weiteres Datenpaket über den dem Sendekanal zugeordneten Empfangskanal übertragen wird, bevor Schritt 3) durchgeführt wird.

Auf diese vorteilhafte Weise wird ausgenutzt, daß z.B. im E-plus-Netz die Basisstation immer in einem Oberband sendet, hier z.B. 1855 - 1865 MHz, während die Endstellen in einem Unterband senden, hier z.B. 1760 - 1770 MHz, wobei der Sendekanal und der Empfangskanal bei einer Zweiwegverbindung immer einen festen Frequenzabstand aufweisen, hier z.B. 95 MHz. Mit anderen Worten, wenn der Sendekanal der Basisstation nicht belegt ist, so ist auch ein um 95 MHz tiefer liegender Empfangskanal der Basisstation nicht belegt. Mit einem einzigen Abfragen im Oberband der Basisstation können folglich zwei zur Zeit nicht belegte Frequenzkanäle ermittelt werden, auf denen nacheinander, also in aufeinander folgenden Zeitschlitzen, Datenpakete ausgesendet werden können. Die verfügbare Kanalkapazität wird auf diese Weise verdoppelt, während nur einmal ein gerade nicht belegter Frequenzkanal im Schritt 1) ermittelt werden muß.

Dies hat den weiteren Vorteil, daß nur das nicht so leicht zu "überhörende" Oberband der Basisstation abgehört wird, während dennoch sowohl das Oberband als auch das Unterband der Basisstation in dem Zusatznetz verwendet werden können, ohne daß versehentlich auf einem Frequenzkanal übertragen wird, der gerade von dem Basisnetz belegt wird. Es wird also nicht nur die Störsicherheit erhöht, auch die Zahl der verfügbaren Frequenzkanäle wird verdoppelt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderern Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:

Fig. 1    in einer vereinfachenden Prinzipskizze ein Basisnetz mit drei Teilgebieten sowie ein sich diesem Basisnetz überlagerndes Zusatznetz;

Fig. 2    ein Blockschaltbild eines in dem Zusatznetz aus Fig. 1 verwendeten Endgerätes; und

Fig. 3    ein vereinfachtes Schema für die Auswahl eines Frequenzkanales in Abhängigkeit von der Adresse des Endgerätes aus Fig. 2 sowie von der Systemzeit.

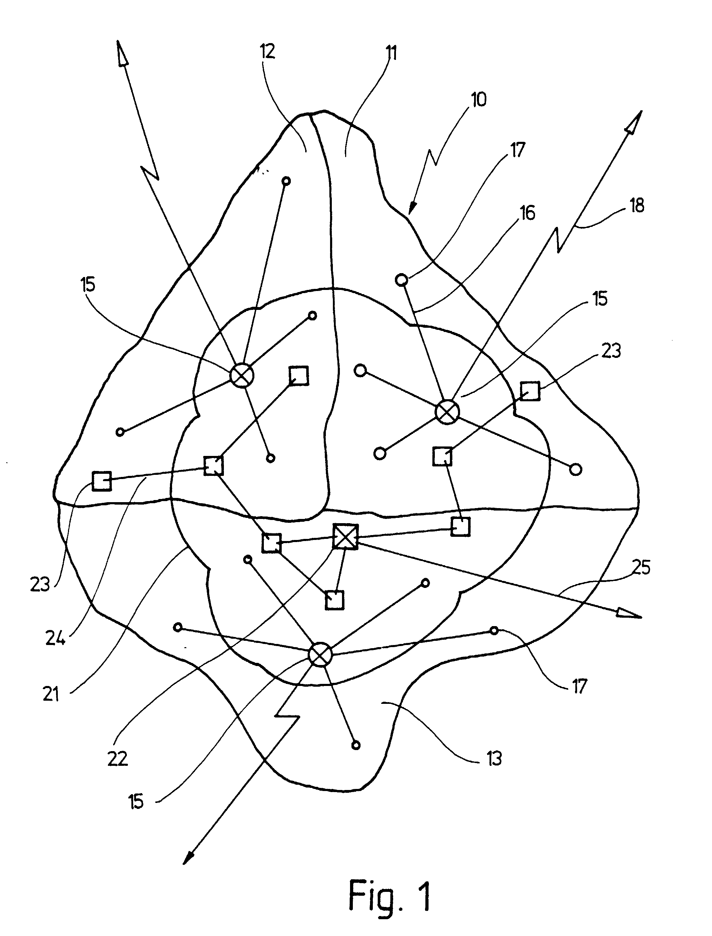

In Fig. 1 ist mit 10 ein Basisnetz, wie z.B. das GSM- oder das PCN-Netz gezeigt, das in drei Teilgebiete 11, 12, 13 aufgeteilt ist. In jedem Teilgebiet 10, 11, 12 weist das Basisnetz 10 eine Basisstation 15 auf, die über Funkkanäle 16 mit Endstellen 17 verbunden ist. Jede sternförmig mit Endstellen 17 verbundene Basisstation 15 weist ferner eine Außenverbindung 18 auf, über die die Basisstation 15 ihre Endstellen 17 mit Endstellen in anderen Netzen verbindet.

Um Übersprechen zu vermeiden, sind den verschiedenen Teilgebieten 11, 12, 13 eigene Frequenzkanäle zugeordnet, so habe das Teilgebiet 11 zum Beispiel die Frequenzkanäle $f_1$ - $f_k$, das Teilgebiet 12 die Frequenzkanäle $f_l$ - $f_m$ und das Teilgebiet 13 die Frequenzkanäle $f_p$ - $f_q$.

Dem Basisnetz 10 überlagert ist ein vermaschtes Zusatznetz 21, das eine Zentralstation 22 sowie miteinander und mit der Zentralstation 22 verbundene Endgeräte 23 aufweist. Diese Verbindung der Endgeräte miteinander und mit der Zentralstation erfolgt über Funkkanäle 24. Auch die Zentralstation 22 ist über eine Außenverbindung 25 mit weiteren Netzen verbunden.

Zur Unterscheidung sind in Fig. 1 die Basisstation 15 und die Endstellen 16 des Basisnetzes durch Kreise und die Zentralstation 22 sowie die Endgeräte 23 des Zusatznetzes durch Vierecke gekennzeichnet. Es ist zu erkennen, daß sich das Basisnetz und das Zusatznetz 21 zumindest teilweise räumlich überdecken. Einige der Endstellen 16 und/oder Endgeräte 23 können mobile Anwender sein. Der Netzaufbau und der Datenpaketfunk über das Zusatznetz 21 ist in den eingangs erwähnten Patentanmeldungen P 43 04 916 sowie P 43 04 906 ausführlich beschrieben.

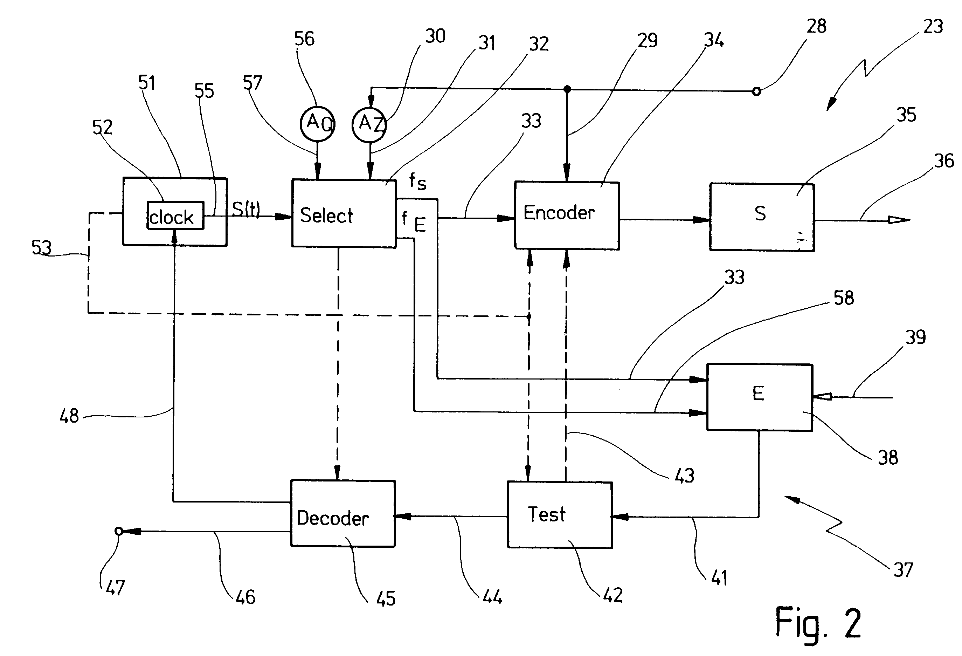

Während in dem Basisnetz 10 die Frequenzkanäle auf die einzelnen Teilgebiete 11, 12, 13 aufgeteilt sind, verwendet das Zusatznetz 21 sämtliche Frequenzkanäle $f_l$ - $f_q$, die dem Basisnetz 10 zugeordnet sind. Durch Einsatz einer jetzt im Zusammenhang mit Fig. 2 näher beschriebenen Frequenzsprungtechnik wird dafür gesorgt, daß der Paketdatenfunk des Zusatznetzes 21 lediglich solche Frequenzkanäle $f_l$ - $f_q$ bezeichnen verwendet, die aktuell von dem Basisnetz 10 nicht belegt sind.

In Fig. 2 ist in Form eines vereinfachenden Blockdiagrammes ein Endgerät 23 des Zusatznetzes 21 näher dargestellt. Die zu übertragenden Daten werden an einem Anschluß 28 in das Endgerät 23 eingegeben. Diese Daten teilen sich auf in Sendedaten 29 sowie eine Zieladresse 30, die über eine Adressleitung 31 in eine Auswahlschaltung β2 gelangt. Die Auswahlschaltung 32 wählt in noch näher zu beschreibender Weise einen Frequenzkanal des Basisnetzes 10 aus, über den die Sendedaten ausgesandt werden sollen. Dieser Frequenzkanal wird über eine Sendefrequenz leitung 33 zu einer Encoder-Schaltung 34 geleitet, welche die auf der Leitung 29 anstehenden Sendedaten in Datenpaketsätze transformiert und dem ausgewählten Frequenzkanal aufprägt. Diese Datenpaketsätze gelangen dann zu einem Sender 35, der diese über einen Antennenanschluß 36 aussendet, sofern der ausgewählte Frequenzkanal nicht gerade von dem Basisnetz 10 belegt wird.

Diese Überprüfung der möglichen Belegung des ausgewählten Frequenzkanales erfolgt in einer Prüfschaltung 37, die einen Empfänger 38 umfaßt, der ebenfalls an die Sendefrequenz leitung 33 angeschlossen ist. Der Empfänger 38 empfängt über seinen Antennenanschluß 39 auf dem ausgewählten Frequenzkanal und leitet die empfangenen Informationen über eine Empfangsleitung 41 zu einer Testschaltung 42 weiter. Die Testschaltung 42 wertet die empfangenen Informationen aus und meldet auf einer Belegtleitung 43, die mit der Encoder-Schaltung 34 verbunden ist, wenn der ausgewählte Frequenzkanal von dem Basisnetz 10 belegt ist. Ist dies der Fall, so wird der aktuelle Datenpaketsatz nicht ausgesendet, vielmehr wird auf noch zu beschreibende Weise ein neuer Frequenzkanal ausgewählt, für den dann überprüft wird, ob er gerade von dem Basisnetz 10 belegt ist.

Wenn der Sendekanal und der bei einer Zweiwegverbindung zugehörige Empfangskanal der Basisstation 15 einen festen Frequenzabstand aufweisen, so bedeutet ein freier Sendekanal der Basisstation 15 auch einen freien Empfangskanal. Da der Sendekanal eine höhere Sendeleistung aufweist als der Empfangskanal, der von einer schwachen Endstelle 17 herrühren kann, wird nur der Sendekanal abgehört und bei freiem Sendekanal zunächst auf diesem und dann im nächsten Schritt auf dem zugeordneten Empfangskanal übertragen, der zwangsläufig frei sein muß. Damit wird ein Prüfschritt gespart und/oder eine Störung des Basisnetzes vermieden.

Anstatt auf dem ausgewählten Frequenzkanal kann der Empfänger 38 auch auf dem Organisationskanal einer Basisstation 15 des Basisnetzes 10 empfangen, über den das Basisnetz 10 ständig sämtliche belegten und/oder freien Frequenzkanäle ausgibt. Die Testschaltung 42 kann auch diese Information verarbeiten, um ein Belegtsignal zu erzeugen.

Wenn der Empfänger 38 dagegen für das aktuelle Endgerät 23 bestimmte Datenpaketsätze empfangen hat, so leitet die Testschaltung 42 diese über eine Leitung 44 zu einer Decoder-Schaltung 45 weiter. Diese Decoder-Schaltung 45 dekodiert die empfangenen Datenpaketsätze und gibt auf ihrer Ausgangsleitung 46 empfangene Daten 47 weiter. Auf einer zweiten Ausgangsleitung 48 liefert die Decoder-Schaltung 45 Signale an eine Ablaufsteuerung 51, die eine Systemzeituhr 52 umfaßt. Die auf der Ausgangsleitung 48 übertragenen Signale sind Systemzeitinformationen, welche das Endgerät 23 von der Zentralstation 22 empfängt. Die Zentralstation 22 sendet eine derartige Zeitinformation zum ersten Mal unmittelbar nach dem Anschalten des Zusatznetzes 21 aus, wodurch alle Endgeräte 23 miteinander und mit der Zentralstation 22 zeitlich synchronisiert werden. Damit keine zu großen Genauigkeitsanforderungen an die Systemzeituhren 52 gestellt werden müssen, überträgt die Zentralstation 22 in bestimmten Zeitabständen erneut derartige Zeitinformationen, die zur weiteren Synchronisation zwischen den Endgeräten 23 verwendet werden.

Die gesamte Ablaufsteuerung des Endgerätes 23 wird über eine Synchronisationsleitung 53 geleitet, die die Ablaufsteuerung 51 mit der Auswahlschaltung 32, der Encoder-Schaltung 34, der Testschaltung 42 sowie der Decoder-Schaltung 45 verbindet. Über die Synchronisationsleitung 53 sorgt die Ablaufsteuerung 51 dafür, daß in bestimmten Zeitschlitzen Frequenzkanäle ausgewählt und überprüft werden, wobei in einem Zeitschlitz jeweils nur ein Frequenzkanal ausgewählt wird, wie dies noch beschrieben werden soll.

Die Systemzeituhr 52 ist an ihrem Ausgang 55 mit der Auswahlschaltung 32 verbunden und liefert dieser die aktuelle Systemzeit S(t). Der Auswahlschaltung 32 wird ferner noch ihre eigene Adresse $A_Q$ in dem Zusatznetz 21 mitgeteilt. Diese sogenannte Quelladresse 56 gelangt über eine Adressleitung 57 in die Auswahlschaltung 32, während die Zieladresse $A_Z$ über die Adressleitung 31 in die Auswahlschaltung 32 gelangt.

Aus der Systemzeit S(t) sowie aus der Zieladresse $A_Z$ berechnet die Auswahlschaltung 32 auf noch näher zu beschreibende Weise den Frequenzkanal $f_S$, über den der nächste Datenpaketsatz ausgesendet werden soll. Ferner berechnet die Auswahlschaltung 32 aus der Systemzeit S(t) sowie aus der Quelladresse $A_Q$ die Kanalfrequenz $f_E$, auf der Sendungen für das Endgerät 23 selbst zu erwarten sind. Dieser Frequenzkanal $f_E$ wird über eine Empfangsfrequenzleitung 58 an den Empfänger 38 gemeldet, der auf diese Weise sozusagen doppelt ausgenutzt wird, zum einen dient er zum Empfang von für das Endgerät 23 bestimmten Datenpaketsätzen auf dem Frequenzkanal $f_E$, während er andererseits auch dazu verwendet wird, die Kanalfrequenz $f_S$ abzuhorchen, auf welcher der eigene Sender 35 Datenpaketsätze aussenden soll.

Die Systemzeit S(t) ist in x Zeitschlitze $\Delta y$ aufgeteilt, so daß gilt:

$$S(t) = n \cdot \Delta y; \; n = 1...x$$

Bei einer Gesamtsystemzeit von 10 Sekunden beträgt jeder Zeitschitz $\Delta y$ z.B. 10 ms, so daß die Zahl der Zeitschlitze x = 1000 beträgt. Jeder einzelne Zeitschlitz $\Delta y$ ist so kurz, daß auch bei einem "Überhören" eines belegten Frequenzkanales die Störung im Basisnetz 10 vernachlässigt werden kann. Ein Zeitschlitz $\Delta y$ ist aber so lang, daß in der Regel ein Datenpaket_ satz in einem Zeitschlitz übertragen werden kann.

Die Zahl x an Zeitschlitzen $\Delta y$ innerhalb der gesamten Systemzeit x $\cdot$ $\Delta y$ ist so groß gewählt, daß die Last über der Zeit auf die Frequenzkanäle gleichmäßig verteilt wird. x wird dabei so gewählt, daß während eines "Durchlaufes" der Systemzeit S(t) jedes Endgerät zumindest einmal jeden verfügbaren Frequenzkanal zum Senden und/oder Empfangen verwenden kann. Wenn x deutlich größer ist als die Zahl der verfügbaren Frequenzkanäle, so kann die Auswahl der Frequenzkanäle in der Auswahlschaltung 32 pseudo-statistisch erfolgen, was den Vorteil hat, daß im Mittel eine größere Trefferquote von nicht-belegten Frequenzkanälen zu erwarten ist, als wenn rein deterministisch die verfügbaren Frequenzkanäle der Reihe nach ausgetestet würden.

Da sich die Systemzeit S(t) zyklisch wiederholt, muß x ebenfalls größer sein als die Zahl der Endgeräte 23 in dem Zusatznetz 21, denn sonst würden einige Endgeräte 23 nie einen Frequenzkanal zum Empfangen zugewiesen bekommen.

Es bleibt festzuhalten, daß die Auswahl eines Frequenzkanales in allen Endgeräten 23 einmal pro Zeitschlitz $\Delta y$ erfolgt, so daß jedes Endgerät 23 jederzeit auf der ihm in dem gerade aktuellen Zeitschlitz zugeordneten Frequenz empfangsbereit ist. Die Endgeräte 23, die gerade Datenpaketsätze zu einer Zieladresse $A_Z$ aussenden wollen, berechnen aus dieser Zieladresse $A_Z$ und der aktuellen Systemzeit S(t) den Frequenzkanal, auf den sich das betreffende Endgerät 23, für das die Sendung bestimmt ist, gerade aufgeschaltet hat.

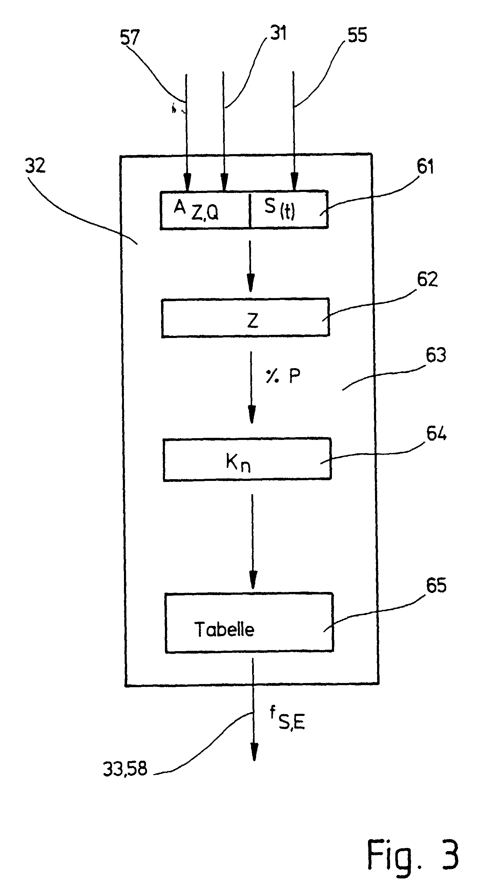

Wie dieses Auswählen der Frequenzkanäle erfolgt, soll nun an Hand von Fig. 3 beschrieben werden, wo die Auswahlschaltung 32 in einem vereinfachenden Blockdiagramm dargestellt ist.

Die Auswahlschaltung 32 weist ein Eingangsregister 61 auf, in das über die Adressleitungen 31 und 57 eine der Adressen $A_Z$ oder $A_Q$ geladen wird. Ferner wird in dieses Register 61 über die Leitung 55 die Systemzeit S(t) geladen. Es sei beispielsweise angenommen, daß eine Zieladresse $A_Z = 45$ geladen wurde, und daß die aktuelle Systemzeit S(t = 3s) = 300 $\Delta y$ ist. In diesem Falle ist der Inhalt des Registers 61 = 45300.

Aus dieser Zahl ermittelt ein Pseudo-Zufallszahlengenerator 62 eine Pseudo-Zufallszahl Z. Da sich die Systemzeit S(t) in zeitlichen Abständen wiederholt, ist auch die Pseudo-Zufallszahl Z insofern deterministisch, als sie sich innerhalb der festgelegten Abstände wiederholt.

Diese Pseudo-Zufallszahl Z wird jetzt bei 63 durch eine Primzahl P geteilt, die die nächstkleinere Primzahl zu der Zahl der Frequenzkanäle in dem Basisnetz 10 ist. Der sich aus dieser Division ergebende Rest ist die Kanalnummer $K_n$, die zu dem Systemzeitpunkt S(t = n) für die Zieladresse $A_Z$ berechnet wurde. Diese Kanalnummer wird bei 64 gespeichert. Mittels dieser Kanalnummer $K_n$ wird aus einer Tabelle 65 die aktuelle Frequenz des Frequenzkanales ermittelt und über die Sendefrequenzleitung 33 bzw. die Empfangsfrequenzleitung 58 ausgegeben.

## Patentansprüche

1. Verfahren zum Übertragen von Datenpaketsätzen über mehrere Frequenzkanäle ($f_l$ - $f_q$), die zumindest zum Teil bereits in einem bestehenden Basisnetz (10) zur digitalen Daten- und/oder Sprachübertragung verwendet werden, wobei die Übertragung in einem Zusatznetz (21) zwischen mehreren Endgeräten (23) erfolgt, von denen jedes eine eigene Adresse ($A_Q$) aufweist, die anderen Endgeräten (23) bekannt ist, mit den Schritten:

   1) Ermitteln eines von dem Basisnetz (10) gerade nicht belegten Frequenzkanales ($f_l$ - $f_q$) aufgrund von von dem Basisnetz (10) selbst ausgesendeten Informationen oder Signalen, die von jedem Endgerät (23) empfangen und entsprechend ausgewertet werden,
   2) Übertragen eines Datenpaketes über den ermittelten Frequenzkanal ($f_s$), und
   3) zyklisches Wiederholen der Schritte 1) und 2) nach Art einer Frequenzsprungtechnik, bis alle Datenpaketsätze einer Sendung übertragen wurden.

2. Verfahren nach Anspruch 1, dadurch gekennzeichnet, daß der Schritt 1) die Unterschritte umfaßt:

   1.1) Auswählen (32) eines der mehreren Frequenzkanäle ($f_l$ - $f_q$),
   1.2) Überprüfen (37), ob der ausgewählte Frequenzkanal ($f_s$) von dem Basisnetz (10) belegt wird, und
   1.3) zyklisches Wiederholen (51) der Schritte 1.1) und 1.2), bis ein gerade nicht belegter Frequenzkanal ($f_s$) ermittelt wurde.

3. Verfahren nach Anspruch 2, dadurch gekennzeichnet, daß im Schritt 1.1) im zeitlichen Mittel alle der mehreren Frequenzkanäle ($f_l$ - $f_q$) gleich häufig ausgewählt werden.

4. Verfahren nach Anspruch 2 oder 3, dadurch gekennzeichnet, daß im Schritt 1.2) der ausgewählte Frequenzkanal ($f_s$) abgehört wird, um zu überprüfen, ob das Basisnetz (10) gerade auf diesem Frequenzkanal ($f_s$) sendet.

5. Verfahren nach Anspruch 2 oder 3, dadurch gekennzeichnet, daß im Schritt 1.2) ein Organisationkanal des Basisnetzes (10) abgehört wird, der alle gerade belegten und/oder gerade freien Frequenzkanäle ($f_l$ - $f_q$) meldet.

6. Verfahren nach einem der Ansprüche 2 bis 5, dadurch gekennzeichnet, daß im Schritt 1.1) der eine Frequenzkanal ($f_s$) in Abhängigkeit von einer allen Endgeräten gemeinsamen Systemzeit (S(t)) und von der Adresse ($A_Z$) des Endgerätes (23) ausgewählt wird, für das die Sendung bestimmt ist, so daß an jedem Endgerät (23) bekannt ist, über welchen Frequenzkanal ($f_I$ - $f_q$) bei gegebener Systemzeit (S(t = n)) für diese Endgerät (23) bestimmte Datenpaketsätze übertragen werden.

7. Verfahren nach Anspruch 6, dadurch gekennzeichnet, daß mit Hilfe eines Pseudo-Zufallszahlengenerators (62) aus der Adresse ($A_Z$) des Endgerätes (23) und der Systemzeit (S(t)) der auszuwählende Frequenzkanal ($f_I$ - $f_q$) berechnet wird.

8. Verfahren nach Anspruch 6 oder 7, dadurch gekennzeichnet, daß die Systemzeit (S(t)) über eine Zentralstation (22) des Zusatznetzes (21) synchronisiert wird.

9. Verfahren nach einem der Ansprüche 1 bis 8, dadurch gekennzeichnet, daß sich eine Systemzeit (S(t)) in einem zeitlichen Abstand (x) wiederholt, der in feste Zeitschlitze ($\Delta y$) eingeteilt ist, und daß die Schritte 1) und 2) synchron mit den Zeitschlitzen ($\Delta y$) durchgeführt werden, wobei der Schritt 2) in der Regel weniger als einen Zeitschlitz ($\Delta y$) erfordert.

10. Verfahren nach Anspruch 9, dadurch gekennzeichnet, daß die Zahl (x) der Zeitschlitze ($\Delta y$) in dem zeitlichen Abstand größer ist als die Zahl der mehreren Frequenzkanäle ($f_I$ - $f_q$), vorzugsweise ein ganzzahliges Vielfaches davon beträgt.

11. Verfahren nach einem der Ansprüche 1 bis 10, dadurch gekennzeichnet, daß die mehreren Frequenzkanäle ($f_I$ - $f_q$) zu Sendekanälen einer Basisstation (15) des Basisnetzes (10) zählen.

12. Verfahren nach einem der Ansprüche 1 bis 11, bei dem ein Sendekanal und ein bei einer Zweiwegverbindung zugehöriger Empfangskanal einer Basisstation (15) des Basisnetzes (10) einen festen Frequenzabstand aufweisen, dadurch gekennzeichnet, daß im Schritt 1) ein von dem Basisnetz (10) gerade nicht belegter Sendekanal der Basisstation (15) ermittelt wird, und daß im Schritt 2) nach dem Übertragen eines Datenpaketes über den übermittelten Sendekanal ein weiteres Datenpaket über den dem Sendekanal zugeordneten Empfangskanal der Basisstation (15) übermittelt wird, bevor Schritt 3) durchgeführt wird.

13. Endgerät für ein Zusatznetz (21) mit mehreren Endgeräten (23) zum Übertragen von Datenpaketsätzen über mehrere Frequenzkanäle ($f_I$ - $f_q$), die zumindest zum Teil bereits von einem bestehenden Basisnetz (10) zur digitalen Daten- und/oder Sprachübertragung verwendet werden, wobei das Endgerät (23) in der Art der Frequenzsprungtechnik die Datenpaketsätze zeitlich gestaffelt auf von dem Basisnetz (10) jeweils nicht belegten Frequenzkanälen ($f_S$, $f_E$) überträgt und eine Prüfschaltung (37) aufweist, die aufgrund von von dem Basisnetz (10) selbst ausgesendeten und von dem Endgerät (23) empfangenen Informationen oder Signalen überprüft, ob der ausgewählte Frequenzkanal ($f_S$) von dem Basisnetz (10) belegt ist.

14. Endgerät nach Anspruch 13, dadurch gekennzeichnet, daß es eine Auswahlschaltung (32) zum Auswählen eines der mehreren Frequenzkanäle ($f_I$ - $f_q$) umfaßt, wobei eine Ablaufsteuerung (51) vorgesehen ist, die die Auswahlschaltung (32) und die Prüfschaltung (37) zyklisch so lange ansteuert, bis ein gerade nicht belegter Frequenzkanal ($f_I$) ermittelt wurde.

15. Endgerät nach Anspruch 14, dadurch gekennzeichnet, daß die Prüfschaltung (37) einen Empfänger (38) umfaßt, der auf dem ausgewählten Frequenzkanal ($f_s$) oder auf einem Organisationskanal des Basisnetzes (10) empfängt, der alle gerade belegten und/oder alle gerade freien Frequenzkanäle ($f_I$ - $f_q$) meldet.

16. Endgerät nach Anspruch 14 oder 15, dadurch gekennzeichnet, daß es eine eigene Adresse ($A_Q$) in dem Zusatznetzwerk (21) aufweist und eine Systemzeituhr (52) umfaßt, wobei die Auswahlschaltung (32) aus der aktuellen, allen Endgeräten (23) gemeinsamen Systemzeit (S(t)) und der Adresse ($A_Z$) des Endgerätes (23), zu dem Datenpaketsätze übertragen werden sollen, den auszuwählenden Frequenzkanal ($f_s$) berechnet.

**Claims**

1. Method for transmitting data packet sets over a plurality of frequency channels ($f_I$ - $f_q$), at least some of which are already being used in an existing base network (10) for the purpose of digital data and/or voice transmission, in which the transmission takes place in a supplementary network (21) between a plurality of terminals (23), each of which has its own address ($A_Q$) known to other terminals (23), comprising the steps of:

    1) determining a frequency channel ($f_I$ - $f_q$) currently not occupied by the base network (10) on the basis of information or signals transmitted by the base network (10) itself which are received and evaluated accordingly by every terminal (23),

    2) transmitting a data packet over the determined frequency channel ($f_S$), and

3) cyclically repeating steps 1) and 2) in the manner of a frequency hopping method until all data packet sets of a transmission have been transmitted.

**2.** Method according to Claim 1, characterised in that step 1) comprises the sub-steps of:

1.1) selecting (32) one of a plurality of frequency channels ($f_l$ - $f_q$),
1.2) checking (37) whether the selected frequency channel ($f_S$) is occupied by the base network (10), and
1.3) cyclically repeating (51) steps 1.1) and 1.2) until a frequency channel ($f_S$) that is currently not occupied has been determined.

**3.** Method according to Claim 2, characterised in that averaged over time, all of the plurality of frequency channels ($f_l$ - $f_q$) are selected equally frequently in step 1.1).

**4.** Method according to Claim 2 or 3, characterised in that the selected frequency channel ($f_S$) is monitored in step 1.2) to check whether the base network (10) is currently transmitting on this frequency channel ($f_S$).

**5.** Method according to Claim 2 or 3, characterised in that a control channel of the base network (10) is monitored in step 1.2), which control channel reports all currently occupied and/or currently free frequency channels ($f_l$ - $f_q$).

**6.** Method according to one of Claims 2 to 5, characterised in that in step 1.1), the one frequency channel ($f_S$) is selected depending on a system time (S(t)) common to all terminals and on the address ($A_Z$) of the terminal (23) for which the transmission is intended, so that it is known at each terminal (23) over which frequency channel ($f_l$ - $f_q$) data packet sets intended for this terminal (23) are being transmitted at a given system time (S(t = n)).

**7.** Method according to Claim 6, characterised in that the frequency channel ($f_l$ - $f_q$) to be selected is calculated from the address ($A_Z$) of the terminal (23) and the system time (S(t)) with the aid of a pseudorandom number generator (62).

**8.** Method according to Claim 6 or 7, characterised in that the system time (S(t)) is synchronised via a central station (22) of the supplementary network (21).

**9.** Method according to one of Claims 1 to 8, characterised in that a system time (S(t)) is repeated at a time interval (x) which is divided into fixed time slices ($\Delta y$), and in that the steps 1) and 2) are performed synchronously with the time slices ($\Delta y$), wherein step 2) usually requires less than a time slice ($\Delta y$).

**10.** Method according to Claim 9, characterised in that the number (x) of time slices ($\Delta y$) in the time interval is greater than the number of the plurality of frequency channels ($f_l$ - $f_q$), preferably being an integral multiple thereof.

**11.** Method according to one of Claims 1 to 10, characterised in that the plurality of frequency channels ($f_l$ - $f_q$) belong to transmitting channels of a base station (15) of the base network (10).

**12.** Method according to one of Claims 1 to 11, in which a transmitting channel and an associated receiving channel, in the case of a two-way connection, of a base station (15) of the base network (10) have a fixed frequency spacing, characterised in that a transmitting channel of the base station (15) which is currently not occupied by the base network (10) is determined in step 1), and in that in step 2), following the transmission of a data packet over the communicated transmitting channel, a further data packet is transmitted over the receiving channel of the base station (15) which is associated with the transmitting channel before step 3) is performed.

**13.** Terminal for a supplementary network (21) having a plurality of terminals (23) for transmitting data packet sets over a plurality of frequency channels ($f_l$ - $f_q$), at least some of which are already being used by an existing base network (10) for the purpose of digital data and/or voice transmission, in which the terminal (23) transmits the data packet sets time-staggered in the manner of a frequency hopping method on frequency channels ($f_S$, $f_E$) that are not occupied by the base network (10) in each case, and has a test circuit (37) which checks whether the selected frequency channel ($f_S$) is occupied by the base network (10) on the basis of information or signals transmitted by the base network (10) itself and received by the terminal (23).

**14.** Terminal according to Claim 13, characterised in that it includes a selection circuit (32) for selecting one of the plurality of frequency channels ($f_l$ - $f_q$), in which a sequence controller (51) is provided which cyclically activates the selection circuit (32) and the test circuit (37) until a frequency channel ($f_S$) that is currently not occupied has been determined.

**15.** Terminal according to Claim 14, characterised in that the test circuit (37) includes a receiver (38) that receives on the selected frequency channel ($f_S$) or on a control channel of the base network (10), which control channel reports all currently occupied and/or all currently free frequency channels ($f_l$ - $f_q$).

16. Terminal according to Claim 14 or 15, characterised in that it has its own address ($A_Q$) in the supplementary network (21) and includes a system clock (52), in which the selection circuit (32) calculates the frequency channel ($f_S$) to be selected from the current system time (S(t)) common to all terminals (23) and the address ($A_Z$) of the terminal (23) to which data packet sets are to be transmitted.

## Revendications

1. Procédé de transmission de séquences de paquets de données par l'intermédiaire de plusieurs canaux de fréquences ($f_l$ - $f_q$), dont au moins une partie est déjà utilisée sur un réseau de base existant (10) pour la transmission numérique de données et/ou vocale, la transmission étant réalisée sur un réseau complémentaire (21) entre plusieurs terminaux (23) dont chacun présente sa propre adresse ($A_Q$) connue par d'autres terminaux (23), comprenant les étapes suivantes :

   - détection d'un canal de fréquences ($f_l$ - $f_q$) qui n'est pas occupé par le réseau de base (10), sur la base d'informations ou de signaux émis par le réseau de base (10) lui-même, qui sont reçus et traités en conséquence par chaque terminal (23),

   - transmission d'un paquet de données par l'intermédiaire du canal de fréquences détecté ($f_s$), et

   - répétition cyclique des étapes 1) et 2) selon une technique de saut de fréquences, jusqu'à ce que toutes les séquences des paquets de données d'un envoi soient transmis.

2. Procédé selon la revendication 1, caractérisé en ce que l'étape 1) comprend les sous-étapes :

   1.1) sélection (32) de l'un des canaux de fréquences multiples ($f_l$ - $f_q$),

   1.2) vérification (37) pour savoir si le canal de fréquences sélectionné ($f_s$) est occupé par le réseau de base (10), et

   1.3) répétition cyclique (51) des étapes 1.1) et 1.2), jusqu'à ce qu'un canal de fréquences ($f_s$) non occupé soit trouvé.

3. Procédé selon la revendication 2, caractérisé en ce que durant l'étape 1.1), en moyenne temporelle, l'ensemble des canaux de fréquences multiples ($f_l$ - $f_q$) est sélectionné le même nombre de fois.

4. Procédé selon la revendication 2 ou 3, caractérisé en ce que durant l'étape 1.2), le canal de fréquences sélectionné ($f_s$) est sondé pour vérifier si le réseau de base (10) est en train d'émettre sur ce canal de fréquences ($f_s$).

5. Procédé selon la revendication 2 ou 3, caractérisé en ce que durant l'étape 1.2), un canal d'organisation du réseau de base (10), qui signale tous les canaux de fréquences occupés et/ou libres ($f_l$ - $f_q$), est sondé.

6. Procédé selon l'une des revendications 2 à 5, caractérisé en ce que durant l'étape 1.1), l'un des canaux de fréquences ($f_s$) est sélectionné en fonction d'un temps de système (S(t)) commun à tous les terminaux et d'une adresse ($A_Z$) du terminal (23) auquel l'envoi est destiné, de telle sorte que sur chaque terminal (23) il est connu par quel canal de fréquence ($f_l$ - $f_q$), avec un temps de système donné (S(t = n)), des séquences de paquets de données destinés à ce terminal (23) sont transmises.

7. Procédé selon la revendication 6, caractérisé en ce que le canal de fréquences ($f_l$ - $f_q$) à sélectionner est calculé à l'aide d'un pseudo-générateur de nombre aléatoires (62) à partir de l'adresse (Az) du terminal (23) et du temps de système (S(t)).

8. Procédé selon la revendication 6 ou 7, caractérisé en ce que le temps de système (S(t)) est synchronisé par l'intermédiaire d'une station centrale (22) du réseau supplémentaire (21).

9. Procédé selon l'une des revendications 1 à 8, caractérisé en ce qu'un temps de système (S(t)) se répète à un intervalle de temps (x) qui est divisé en tranches de temps fixes ($\Delta y$), et que les étapes 1) et 2) sont exécutées de façon synchrone avec les tranches de temps ($\Delta y$), l'étape 2) nécessitant en règle générale moins d'une tranche de temps ($\Delta y$).

10. Procédé selon la revendication 9, caractérisé en ce que le nombre (x) de tranches de temps ($\Delta y$) dans l'intervalle de temps est supérieur au nombre des canaux de fréquences multiples ($f_l$ - $f_q$), et qu'il est de préférence un multiple entier de celui-ci.

11. Procédé selon l'une des revendications 1 à 10, caractérisé en ce que les canaux de fréquences multiples ($f_l$ - $f_q$) comptent comme canaux d'émission d'une station de base (15) du réseau de base (10).

12. Procédé selon l'une des revendications 1 à 11, dans lequel un canal d'émission et, en cas d'une liaison à double voie, un canal de réception associé à une station de base (15) du réseau de base (10) présentent un intervalle de fréquence fixe, caractérisé en ce que durant l'étape 1) un canal d'émission de la station de base (15) qui n'est pas occupé par le réseau de base (10) est détecté, et que durant l'étape 2), après la transmission d'un paquet de données par l'intermédiaire du canal d'émission déterminé, un autre paquet de données est transmis par le canal de réception de la station de base (15) associé au canal d'émission, avant d'exécuter l'étape 3).

13. Terminal pour un réseau supplémentaire (21) comprenant plusieurs terminaux (23) pour la transmission de séquences de paquets de données par l'intermédiaire de plusieurs canaux de fréquences ($f_I$ - $f_q$), dont au moins une partie est déjà utilisée sur un réseau de base (10) existant pour la transmission numérique de données et/ou vocale, dans lequel le terminal (23) transmet selon la technique de sauts de fréquences, échelonnées dans le temps, les séquences de paquets de données sur des canaux de fréquences ($f_S$, $f_E$) respectivement non occupés par le réseau de base (10), et présente un circuit de contrôle (37) qui vérifie, à l'aide des informations ou signaux envoyés par le réseau de base (10) lui-même et reçus par le terminal (23), si le canal de fréquences ($f_S$) sélectionné est occupé par le réseau de base (10).

14. Terminal selon la revendication 13, caractérisé en ce qu'il comprend un circuit de sélection (32) pour sélectionner l'un des canaux de fréquences multiples ($f_I$ - $f_q$), une commande séquentielle (51) étant prévue, pour commander cycliquement le circuit de sélection (32) et le circuit de contrôle (37) jusqu'à ce qu'un canal de fréquence ($f_i$) non occupé soit trouvé.

15. Terminal selon la revendication 14, caractérisé en ce que le circuit de contrôle (37) comprend un récepteur (38) qui reçoit sur le canal de fréquences ($f_S$) sélectionné ou sur un canal d'organisation du réseau de base (10), qui signale tous les canaux de fréquences ($f_I$ - $f_q$) occupés et/ou libres.

16. Terminal selon la revendication 14 ou 15, caractérisé en ce qu'il présente sa propre adresse ($A_Q$) sur le réseau supplémentaire (21) et qu'il comprend une horloge de temps de système (52), le circuit de sélection (32) calculant le canal de fréquences ($f_s$) à sélectionner à partir du temps de système ($S(t)$) commun à tous les terminaux (23) et de l'adresse ($A_Z$) du terminal (23) auquel les séquences de paquets de données sont à transmettre.

Fig. 1

Fig. 2

EP 0 749 665 B1

Fig. 3